# EUROPÄISCHE PATENTANMELDUNG

(11) **EP 2 019 290 A2**
(43) Veröffentlichungstag der Anmeldung: **28.01.2009**
(21) Anmeldenummer: 08104519.7
(22) Anmeldetag: 24.06.2008
(51) Int. Cl.: G01C 21/34, G01C 21/36

(54) **Verfahren zur Zieleingabe an einem Navigationsgerät und Navigationsgerät**

(30) Priorität: 18.07.2007 DE 102007033425
(71) Anmelder: ROBERT BOSCH GMBH, 70442 Stuttgart (DE)
(72) Erfinder: Kreft, Peter, 30966 Hemmingen (DE)

(57) **Zusammenfassung**

Es wird ein Verfahren zur Zieleingabe an einem Navigationsgerät (1) durch Eingabe einer Telefonnummer sowie ein Navigationsgerät zur Durchführung des Verfahrens vorgeschlagen, bei dem eine Telefonnummer eines mobilen Funkgeräts (2) eingegeben wird und über eine Kommunikationsverbindung (154, 34) von einem Funknetzbetreiber (3), in dessen Funknetz (31) das Funkgerät (2) betrieben wird, vorliegende Informationen über den Standort des Funkgeräts (2) abgefragt und als Zielort für eine Routenberechung und/oder Zielführung in das Navigationsgerät (1) übernommen werden.

Vorteilhaft muss der Standort des mobilen Funkgeräts in diesem nicht bekannt sein. Ferner ist vorteilhaft eine direkte Datenübertragung vom mobilen Funkgerät zum Navigationsgerät nicht erforderlich. Insbesondere ist keine Kommunikationsverbindung zwischen mobilem Funkgerät und Navigationsgerät erforderlich.

## Beschreibung

### Stand der Technik

Die Erfindung geht von einem Verfahren und einem Navigationssystem nach der Gattung der unabhängigen Patentansprüche aus.

Bekannt sind Navigationssysteme wie Fahrzeug-Navigationssysteme für den Festeinbau in Kraftfahrzeugen, tragbare Personal Navigation Devices, also Navigationssysteme auf Basis von Hand-Held-Computern oder Mobile Phone Navigations, also Navigationssysteme auf Basis von Mobilfunktelefonen, die vorzugsweise in Kraftfahrzeugen verwendet werden. Diese Navigationssysteme beinhalten typischerweise eine Positionsbestimmung, eine Zieleingabe-Vorrichtung, eine Routenberechnung und eine Zielführung. Die Zieleingabe als Voraussetzung für eine Routenberechnung erfolgt auf der Basis einer alphanumerischen Adresseingabe (Land/Stadt/Strasse), einer POI-Auswahl (Point of Interest), einer Zielwahl über eine Landkarten-Anzeige oder einer Verwendung eines programmierten Zielspeichers.

Aus der EP 0 703 432 B1 ist ein Navigationssystem bekannt, bei dem ein Zielort für eine Routenberechnung durch Eingabe einer dem Ziel zuordenbaren Telefonnummer eingegeben werden kann. Dazu sind in einer Datenbasis des Navigationssystems Zielortkoordinaten Telefonnummern fest zugeordnet abgespeichert. Bei der Telefonnummer handelt es sich entweder um einen Festnetzanschluss, dem eine konstante Adressinformation (Koordinaten) zugeordnet wird, oder um einen Identifikationscode, der als Synonym für eine konstante Adressinformation verwendet wird. Bei Eingabe einer Telefonnummer wird die der Telefonnummer zugeordnete Adresse aus dem Speicher ausgelesen und dem Benutzer angezeigt. Dieser kann die angezeigte Adresse als Zielort für die nachfolgende Routenberechnung bestätigen.

Aus der DE 102 42 126 A1 sind ein Navigationsverfahren und ein Navigationssystem bekannt, bei denen eine Zielführung zu einem beweglichen Objekt dadurch ermöglicht wird, dass das bewegliche Objekt eine Eigenortung, beispielsweise mittels GSM, durchführt und die so ermittelte Position über Kommunikationsmittel an das Navigationssystem übermittelt. Das Navigationssystem übernimmt diese erhaltene Position oder eine Prognose über eine voraussichtliche Position aus mehreren von dem beweglichen Objekt erhaltenen aufeinanderfolgenden Positionen als Zielort für eine Routenberechnung und anschließende Zielführung.

Aus der "Hannoversche Allgemeine Zeitung" vom 3.6.2006, Artikel "Handy-Ortung für jedermann" ist es bekannt, dass die Position eines Mobiltelefons, welches nach dem GSM- oder dem UMTS-Standard arbeitet, vom Funknetzbetreiber ja nach Dichte der stationären Sende- und Empfangseinrichtungen, im weiteren auch Sendemasten, des Funknetzes mit einer Genauigkeit von bis zu 50 Metern bestimmt werden kann. Dort wird ein Internet-Service beschrieben, der es ermöglichen soll, die Daten des Funknetzbetreibers zu nutzen, um einen Aufenthaltsort eines bestimmten Mobiltelefons zu bestimmen. Nach Registrierung bei einem solchen Serviceanbieter wird einem Nutzer dieses Service nach Eingabe der Telefonnummer des zu ortenden Mobiltelefons dessen Position auf einer Kartendarstellung angezeigt.

### Vorteile der Erfindung

Die vorliegende Erfindung ermöglicht die Eingabe eines Zielorts an einem Navigationssystem durch Eingabe einer Telefonnummer eines mobilen Funkgeräts, wobei der Standort des mobilen Funkgeräts ermittelt und als Zielort in das Navigationssystem übernommen wird. Die Eingabe kann durch eine Benutzereingabe einer Telefonnummer über eine Benutzerschnittstelle, etwa durch sukzessives Eingeben der Ziffernfolge der Telefonnummer über eine entsprechende Zifferntastatur, erfolgen. Alternativ kann die Telefonnummer auch aus einem elektronischen Adressbuch oder Zielspeicher ausgewählt und von dort übernommen werden. Vorteilhaft muss der Standort des mobilen Funkgeräts in diesem nicht bekannt sein. Ferner ist vorteilhaft eine direkte Datenübertragung vom mobilen Funkgerät zum Navigationsgerät nicht erforderlich. Insbesondere ist keine Kommunikationsverbindung zwischen mobilem Funkgerät und Navigationsgerät erforderlich.

Dazu ist bei einem erfindungsgemäßen Verfahren zur Zieleingabe an einem Navigationsgerät vorgesehen, dass eine Telefonnummer eines mobilen Funkgeräts eingegeben wird, dass über eine Kommunikationsverbindung von einem Funknetzbetreiber, in dessen Funknetz das Funkgerät betrieben wird, beim Funknetzbetreiber vorliegende Informationen über den Standort des Funkgeräts abgefragt und als Zielort für eine Routenberechung und/oder Zielführung in das Navigationsgerät übernommen werden.

Weiterhin ist das erfindungsgemäße Zieleingabeverfahren von besonderem Vorteil in Fällen, in denen der Nutzer eines Navigationssystems oder Routenberechnungssystems eine bestimmte Person auffinden möchte, deren Aufenthaltsort jedoch schwer so beschreibbar ist, dass er über die klassischen, oben beschriebenen Zieleingabe-Verfahren in ein Navigationssystem oder Routenberechnungssystem eingegeben werden kann.

Bewegt sich die aufzufindende Person von ihrem ursprünglichen Aufenthaltsort fort, so ist es zudem möglich, das Ziel des Navigations- oder Routenberechnungssystems gemäß dem neuen Standort der aufzufindenden Person anzupassen.

Hierzu ist es von besonderem Vorteil, wenn die Position der Zielperson bzw. des mobilen Funkgeräts entweder in regelmäßigen Zeitabständen vom Funknetzbetreiber an das Navigationsgerät übermittelt wird oder alternativ regelmäßg dann, wenn sich der Standort des mobilen Endgeräts gegenüber einer zuletzt festgestellten Position verändert oder um eine bestimmte Strecke geändert hat. Vorteilhaft wird dabei die erneute Positionsübermittlung durch den Funknetzbetreiber iniziiert. Alternativ kann aber auch in regelmäßigen Zeitabständen die jeweils aktuelle Position des mobilen Funkgeräts durch das Navigationsgerät bei Funknetzbetreiber abgefragt werden.

### Zeichnungen

Ausführungsbeispiele der Erfindung sind in den Figuren dargestellt und werden nachfolgend näher erläutert.

Es zeigen
Figur 1 ein Navigationssystem zur Durchführung des erfindungsgemäßen Zieleingabeverfahrens und
Figur 2 einen Ablaufplan des erfindungsgemäßen Verfahrens.

### Beschreibung der Ausführungsbeispiele

Die Erfindung nutzt in vorteilhafter Weise eine vorhandene Technik, die es ermöglicht, ein mobiles Funkgerät über einen Funknetz-Betreiber, in dessen Funknetz das mobile Funkgerät betrieben wird, und verwendete Sendemasten im Umfeld des mobilen Funkgeräts mit Hilfe eines speziellen Service orten zu können. Die Ortung ist bei Kenntnis der Telefonnummer des mobilen Funkgeräts möglich. Ergänzende Hinweise können dem eingangs erwähnten Zeitungsartikel entnommen werden.

Im Zusammenhang mit der vorliegenden Erfindung wird unter dem Begriff Navigationsgerät ein elektrisches Gerät verstanden, welches nach Eingabe eines Zielorts eine Route von einem Standort zu einem Zielort berechnet und die Route an den Benutzer ausgibt. Vorzugsweise umfasst das Navigationsgerät über die Möglichkeit einer Eigenortung und einer Zielführung, das heißt eine Ausgabe von Richtungshinweisen in Abhängigkeit von einem aktuellen Standort und der berechneten Route zur Befolgung der Route.

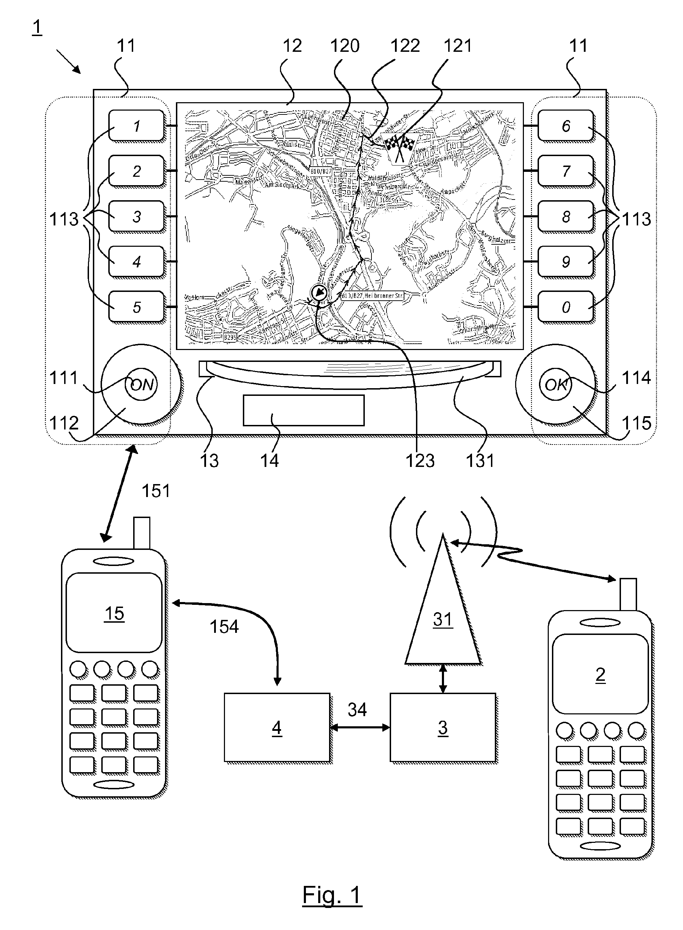

Dieses Navigationsgerät kann ein Personal Computer oder ein beliebiger Rechner mit entsprechender Software-Ausstattung sein. In Figur 1 ist schematisch ein Navigationsgerät 1 dargestellt, welches beispielsweise für einen Einbau typischerweise in einem Einbauschacht in einer Mittelkonsole eines Kraftfahrzeugs vorgesehen ist. Denkbar ist ebenso ein sogenanntes Personal Navigation Device, also ein Navigationsgerät auf Basis eine Handheld-Computers oder PDA (Personal Digital Assistent) oder eines speziell dafür vorgesehenen Kleinrechners oder eine Mobile Phone Navigation, also ein Navigationsgerät auf Basis eines Mobiltelefons mit entsprechender Software-Ausstattung und entsprechender Zusatzausstattung wie etwa einem GPS-Empfänger zum Empfang von GPS-Satelliten-Ortungs-Signalen.

Dieses Navigationsgerät 1 umfasst typischerweise in an sich bekannter Weise eine Eingabeeinheit 11, eine Anzeigeeinheit 12, einen Kartenspeicher und eine Routenberechnungseinheit.

Die Eingabeeinheit 11 umfasst Eingabeelemente, wie im vorliegenden Fall Drucktasten 111, 113 und 114 und inkrementelle Drehsteller 112 und 115, zur Eingabe von Informationen, im Zusammenhang mit der vorliegenden Erfindung insbesondere zur Eingabe einer Telefonnummer. Die Anzeigeeinheit 12 ist in Form eines LC-Displays ausgeführt und dient der Darstellung einer Landkarte mit darin eingezeichneten Verkehrswegen und daneben zur Darstellung von Hilfsinformationen zur Benutzerführung im Rahmen beispielsweise der Zieleingabe. Der Kartenspeicher ist im vorliegenden Fall in Form eines optischen plattenförmigen Datenträgers 131, wie etwa CD- oder DVD-ROM, ausgeführt und wird mit einem entsprechenden Laufwerk 13 des Navigationsgeräts 1 gelesen. Die Routenberechnungseinheit ist im Wesentlichen in Form von Software ausgeführt, die von einem Prozessor des Navigationsgeräts 1 abgearbeitet wird.

Kartenspeicher, Eingabeeinheit und Routenberechnungseinheit können auch mit Hilfe eines gemeinsamen Daten-Speichers und eines gemeinsamen Prozessors abgebildet sein. Alternativ oder ergänzend zum Laufwerk 13 kann das Navigationsgerät 1 auch einen Modulschacht 14 zur Aufnahme einer Erweiterungssteckkarte nach dem PC- oder dem Express-Card-Standard und/oder zum Lesen von kartenförmigen Datenspeichern wie CF- (Compact Flash), SD- (Secure Digital), MM- (Multi Media), XD-Card oder dergleichen aufweisen.

Weiterhin wird zur Durchführung der Erfindung ein Kommunikationsmodul benötigt, welches in der Lage ist, über einen Dienstanbieter den Standort eines aufzufindenden mobilen Funkgeräts und damit insbesondere einer aufzufindenden Person zu erfragen und zu empfangen.

Dazu ist das Navigationsgerät 1 mit einem Kommunikationsmodul 15 verbunden. Diese Verbindung kann drahtgebunden sein, insbesondere kann das Kommunikationsmodul 15 zusammen mit dem Navigationsgerät 1 in einem gemeinsamen Gehäuse verbaut sein, wie dies beispielsweise im Falle einer Mobile Phone Navigation, also einer auf der Plattform eines Mobilfunktelefons betriebenen Navigationssoftware der Fall ist. Alternativ kann das Kommunikationsmodul auch als bezüglich des Navigationsgeräts 1 externes Gerät, insbesondere als separates Mobilfunktelefon 15 ausgebildet und mit dem Navigationsgerät 1 über eine drahtgebundene oder alternativ eine drahtlose Kommunikationsverbindung 151, wie etwa eine Infrarot-, Bluetooth- oder WLAN-Verbindung verbunden sein.

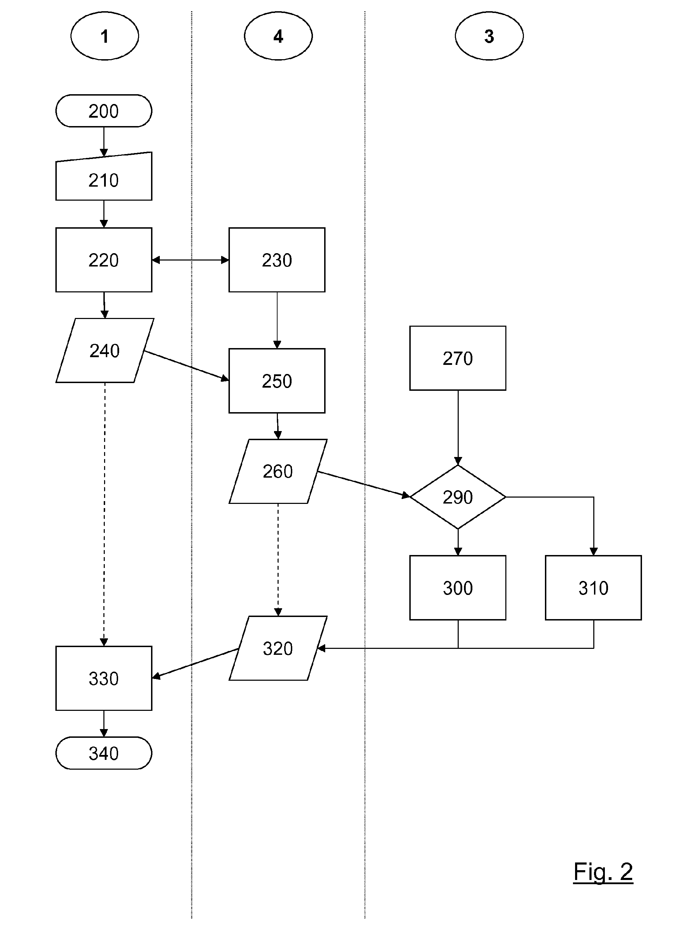

Erfindungsgemäß zeichnet sich das Navigationsgerät 1 dadurch aus, dass neben den an sich bekannten oben genannten Zieleingabe-Möglichkeiten, die Eingabe eines Navigationsziels durch Eingabe einer Telefonnummer eines mobilen Funkgeräts, insbesondere Mobiltelefons, ermöglicht wird. Figur 2 zeigt den Ablauf der Zieleingabe mittels Mobilfunkgerät-Telefonnummer.

Vorzugsweise sind dazu die Drucktasten 113 des Navigationsgeräts 1 mit den Ziffern 1 bis 0 beschriftet.

Der Ablauf startet mit Schritt 200 nach Auswahl der Zieleingabe-Option "Zieleingabe über Telefonnummer". Im darauffolgenden Schritt 210 wird nun die dem Ziel zuordenbare Telefonnummer beim Benutzer abgefragt und von diesem über die Zifferntasten 113 eingegeben. Alternativ kann vorgesehen sein, dass der Benutzer zur Telefonnummerneingabe einen entsprechenden Eintrag aus einem hinterlegten Adressbuchspeicher oder dergleichen, in dem dem Eintrag eine Telefonnummer zugeordnet ist, abruft.
In einem darauffolgenden Schritt 220 bzw. 230 wird nach Eingabe der Telefonnummer eine Kommunikationsverbindung 154, beispielsweise über eine Mobilfunkverbindung, zu einem Dienstanbieter 4 hergestellt. Alternativ kann beispielsweise auch eine Verbindung über Internet via WLAN-Zugangspunkt oder dergleichen hergestellt werden. Sobald diese Kommunikationsverbindung 154 zwischen Navigationsgerät 1 und Dienstanbieter 4 hergestellt ist, überträgt das Navigationsgerät 1 die eingegebene Telefonnummer über die Kommunikationsverbindung 154 an einen Dienstanbieter 4 (Schritt 240). Der Dienstanbieter 250 überprüft die erhaltene Telefonnummer darauf hin, ob es sich dabei um eine gültige Telefonnummer eines Mobilfunk-Netzbetreibers handelt (Schritt 250). Sofern es sich um eine gültige Mobilfunk-Telefonnummer handelt, ermittelt der Dienstanbieter 4 aus der Telefonnummer, in welchem Mobilfunknetz das der eingegebenen Mobilfunk-Telefonnummer zugeordnete mobile Funkgerät 2 betrieben wird. Diese Prüfung kann bereits anhand der eingegebenen Mobilfunk-Telefonnummer erfolgen, beispielsweise sind die Mobilfunk-Vorwahlnummern 0171, 0161 etwa für einen ersten Netzbetreiber, die weiteren Vorwahlnummern 0172 und 0162 für einen zweiten Netzbetreiber und so weiter reserviert. Nach Feststellung, in welchem der Mobilfunknetze das gesuchte mobile Funkgerät 2 betrieben wird, übermittelt der Dienstanbieter 4 über eine weitere Kommunikationsverbindung 34 die vom Navigationsgerät 1 erhaltene Telefonnummer an den entsprechenden Funknetzbetreiber 3 (Schritt 260).

Solange das gesuchte mobile Funkgerät 2 im Funknetz des Funknetzbetreibers eingebucht ist, kann der Funknetzbetreiber 3 feststellen, über welche Sende- und Empfangseinrichtung 31, nachfolgend auch Sendemast, das Funkgerät 2 an das Funknetz angebunden ist. Weiterhin kann der Funknetzbetreiber 3 anhand der Signalstärke und weiterhin anhand von mit dem Funkgerät 2 ausgetauschten Informationen, etwa die Sendesignalstärke des mobilen Funkgeräts, feststellen, in welcher Entfernung vom Sendemast sich das Funkgerät 2 befindet. Für den Fall, dass das Funkgerät 2 sich im Einzugsbereich zweier oder mehrerer Sendemasten 31 des Funknetzbetreibers 3 befindet, ist eine darüber hinausgehende, noch präzisere Ortung des Funkgeräts 2 möglich. Diese Ortungsdaten werden vom Funknetzbetreiber 3 fortlaufend bestimmt (Schritt 270), solange das mobile Funkgerät 2 im Funknetz eingebucht ist.

Nach Erhalt der am Navigationsgerät 1 eingegebenen Telefonnummer vom Dienstanbieter 4 prüft der Funknetzbetreiber 3, ob die erhaltene Telefonnummer als gültige Telefonnummer registriert ist und ob das zugehörige mobile Funkgerät 2 aktuell im Funknetz eingebucht ist (Schritt 290). Ist dies der Fall, werden nachfolgend die vom Funknetzbetreiber 3 ermittelten Ortungsdaten des mobilen Funkgeräts 2 vom Funknetzbetreiber 3 an den Dienstanbieter 4 übermittelt (Schritt 300). Dieser sendet die erhaltene Ortsinformationen an das Navigationsgerät 1 (Schritt 320). Stellt der Dienstanbieter 4 hingegen fest, dass das mobile Funkgerät 2 zum Zeitpunkt der Übermittlung der Telefonnummer vom Navigationsgerät 1 nicht im Funknetz eingebucht ist, erzeugt dieser vorzugsweise eine entsprechende Fehlermeldung und übermittelt diese, gemäß einer bevorzugten Ausführungsform der Erfindung zusammen mit dem letzten festgestellten Standort des mobilen Funkgerät 2, an den Dienstanbieter 4 (Schritt 310), der diese Information wiederum an das Navigationsgerät 1 weitergibt.

Die Position des gesuchten mobilen Funkgeräts 2 kann im einfachsten Fall über Koordinaten mitgeteilt werden. Genauso ist aber die Übermittlung einer Adresse oder geeigneten ID einer digitalen Karte denkbar. Das Kommunikationsmodul 15 übermittelt die Zielbeschreibung des gesuchten Mobiltelefons 2 an das Navigationssystem 1. Das Navigationssystem 1 bietet daraufhin eine Routenberechnung zu dem Standort des Mobiltelefons 2 an. Das Ergebnis der Routenberechnung wird in Form einer Kartendarstellung 120 mit darin vermerktem Standort 121 des mobilen Funkgeräts 2, dem aktuellen Standort des Navigationsgeräts 1 123 und der berechneten Route 122 vom aktuellen Standort des Navigationsgeräts 1 zum Standort des mobilen Funkgeräts 2 dargestellt.

Gemäß einer Weiterentwicklung kann eine wiederholte Überprüfung des Standortes des mobilen Funkgeräts vorgesehen sein und im Falle einer veränderten Position des mobilen Funkgeräts 2 errechnet dann das System eine optimierte Route zum veränderten Ziel.

Insbesondere kann hier vorgesehen werden, dass das Navigationssystem die vorliegenden Informationen über den Standort des mobilen Funkgeräts über die Kommunikationsverbindung vom Funknetzbetreiber nach einer vorgegebenen Zeitspanne erneut abfragt. Diese Abfrage macht Sinn solange das Navigationssystem das Ergebnis der Routenberechnung beispielsweise in einer Kartendarstellung anzeigt oder das Navigationssystem eine Zielführung zum Standort des Funkgeräts aktiv betreibt. Alternativ kann die erneute Abfrage des Standorts des Funkgeräts unter Mitwirkung des Nutzers des Navigationssystems erfolgen, etwa durch eine entsprechende Bestätigung oder degleichen. Eine neue Position des Funkgeräts wird daraufhin für die Routenberechnung und Zielführung übernommen.

Die Erfindung kann auch dahingegehend erweitert werden, dass der Dienstanbieter bis zur Stornierung des Auftrags in regelmäßigen Zeitabständen über den Standort des Funkgeräts informiert. Alternativ kann der Dienst ausschließlich neue Standorte des Funkgeräts mitteilen, wenn sich diese von der ursprünglichen Position um eine vorgegebene Distanz entfernt haben. Eine neue Position des Funkgeräts wird daraufhin für die Routenberechnung und Zielführung übernommen.

Eine wiederholte Übermittlung der Standortdaten an das abfragende Navigationssystem kann sowohl durch den Netzbetreiber bei Festestellung einer Standortveränderung des mobilen Funkgeräts oder nach vorgegebenen Zeitabschnitten regelmäßig iniziiert werden, als auch durch das abfragende Navigationssystem, insbesondere nach Ablauf vorgegebener Zeitintervalle seit der jeweils letzten Abfrage.

## Patentansprüche

1. Verfahren zur Zieleingabe an einem Navigationsgerät (1), wobei eine Telefonnummer eingegeben wird,
**dadurch gekennzeichnet,**
**dass** als Telefonnummer eine Telefonnummer eines mobilen Funkgeräts (2) eingegeben wird, und
**dass** über eine Kommunikationsverbindung (154, 34) von einem Funknetzbetreiber (3), in dessen Funknetz (31) das Funkgerät (2) betrieben wird, vorliegende Informationen über den Standort des Funkgeräts (2) abgefragt und als Zielort für eine Routenberechung und/oder Zielführung in das Navigationsgerät (1) übernommen werden.

2. Verfahren nach Anspruch 1, **dadurch gekennzeichnet, dass** die Telefonnummer vom Navigationsgerät (1) an einen Dienstanbieter (4) übermittelt wird, der den Standort des Funkgeräts (2) vom Funknetzbetreiber (3) abgefragt und die abgefragten Informationen über den Standort des Funkgeräts (2) an das Navigationsgerät (1) übermittelt.

3. Verfahren nach einem der vorhergehenden Ansprüche, **dadurch gekennzeichnet, dass** der Dienstanbieter (4) aus der vom Navigationsgerät (1) erhaltenen Telefonnummer denjenigen aus mehreren möglichen Funknetzbetreibern (3) ermittelt, in dessen Funknetz das mobile Funkgerät (2) betrieben wird.

4. Verfahren nach einem der vorhergehenden Ansprüche, **dadurch gekennzeichnet, dass** die Telefonnummer einem elektronischen Adressbuch oder einem Zielspeicher entnommen wird.

5. Navigationsgerät, ausgebildet zur Durchführung des Verfahrens nach einem der vorhergehenden Ansprüche, mit einer Eingabeeinheit (11) zur Eingabe einer Telefonnummer eines mobilen Funkgeräts (3), mit einem Kommunikationsmodul (15) zur Übermittlung der eingegebenen Telefonnummer sowie zum Erhalt von Informationen über den Standort des mobilen Funkgeräts (3) und mit einem Routenberechnungsmodul zur Berechnung einer Route zum Standort des Funkgeräts (3).
